# EUROPEAN PATENT SPECIFICATION

(11) **EP 3 831 213 B1**
(45) Date of publication and mention of the grant of the patent: **12.07.2023**
(21) Application number: 19398015.8
(22) Date of filing: 04.12.2019
(51) Int. Cl.: A23L 2/52, A23L 2/68, A23L 33/105

(54) **NON-CARBONATED BEVERAGE COMPRISING ALOE VERA AND PLANT EXTRACTS**
KOHLENSÄUREFREIES GETRÄNK MIT ALOE VERA UND PFLANZENEXTRAKTEN
BOISSON NON CARBONÉE COMPRENANT DE L'ALOE VERA ET DES EXTRAITS DE PLANTES

(43) Date of publication of application: 09.06.2021
(73) Proprietor: Vegastrade-Comércio de Perfumeria e Bijutaria, LDA, 4770-287 Lagoa-Famalicão (PT)
(72) Inventor: Zapata, José Miguel, 28805 Alcalá de Henares (ES); Gutierrez, Iván Llamas, 28805 Alcalá de Henares (ES); da Costa, Nelson, 4770-770 Vermoim VNF (PT)
(74) Representative: Clarke Modet & Co.

(56) References cited:
- CN-A- 105 495 206
- ES-U- 1 196 458
- US-A1- 2006 147 600
- US-A1- 2015 366 906
- US-A1- 2018 264 065

## Description

### FIELD OF THE INVENTION

The present invention belongs to the field of the food industry, more specifically to the subfield of special food and food supplements. The invention refers to an alcohol-free beverage including plant extracts.

### BACKGROUND OF THE INVENTION

Energy or hypertonic drinks are non-alcoholic drinks that contain substances that stimulate the body that prevent or reduce fatigue and consumer exhaustion. Energy drinks are also characterized by increasing the mental ability of the individual and providing an increase in physical endurance.

These drinks are mainly composed of caffeine or alkaloid derivatives, vitamins, carbohydrates and other natural organic substances. It has been proven that the combination of these substances eliminates the feeling of exhaustion of the person who drinks them.

There are many energy drinks on the market, and carbonated energy drinks, with infinite formulations and different assay and preparation procedures.

The useful model ES 1196458 describes a carbonated energy drink which includes aloe vera which includes extracts of guarana and ginseng, wherein it also includes Canarian Aloe vera organic juice. US 2018/264065 discloses health beverage combatting fatigue comprising maca extract, guarana extract, acai extract, citric acid and ascorbic acid with or without carbonic acid. US 2015/366906 discloses the use of aloe vera, agave, ascorbic acid optionally with citric acid and agave syrup with chocolate, orange and / or peach in energy beverages.

### DESCRIPTION OF THE INVENTION

The invention is defined by the claims. The present invention refers to a non carbonated beverage comprising - 20-60 % agave syrup (w/v); - 0.2-1.2 % maca extract (w/v); - 0.4-1.2 % guarana extract (w/v); - 0.2-1.2 % acai extract (w/v); - 0.5-1.0 % citric acid (w/v); - 0.05 - 0.20 % ascorbic acid (w/v); - aloe vera juice; wherein the percentages are referred to the total volume of the drink, and wherein the beverage does not include carbonic acid (H2CO3).

The beverage of the invention is considered an energy type beverage because it prevents or decreases fatigue and exhaustion, in addition to increasing mental ability and providing increased physical endurance. In contrast to most energy drinks, the beverage of the invention is characterized by not including stimulants such as caffeine, vitamins, aspartame or taurine.

Aloe vera (Aloe vera) also known as Sábila, Aloe de Barbados or Aloe de Curaçao, among others, is a plant of the Asphodeloideae subfamily within the Xanthorrhoeaceae family. This plant is grown due to its medicinal use, due to the chemical compounds present mainly in its leaves. In a preferred assay of the invention, the aloe vera present in the beverage of the invention is aloe vera juice. The juice (or juice) of aloe vera is the liquid substance that is extracted when liquefying the original product.

A plant extract is a complex mixture of chemical compounds, obtained by physical, chemical and / or microbiological processes from a plant source. In a preferred assay of the invention, the plant extracts present in the beverage of the invention are selected from the group comprising: maca, guarana, acai, agave, among others. In a more preferred assay, the beverage includes the vegetable extracts of agave, maca, guarana and acai. Vegetable extracts may be included in the form of juice or juice, syrup or powder.

A compound classified as "BIO" refers to a plant ingredient whose assay and transformation is defined by precise regulatory texts at European, national and international level (EEC n ° 2092/91, JAS, NOP etc.). Organic farming to produce these compounds does not use any synthetic products (chemical fertilizers, pesticides, antibiotics, heavy metals ...) or GMO (genetically modified organisms) and respects the environment, the ecosystem (rotation of cultures, use of natural fertilizers ...) and the consumer (of ingredients of a superior efficiency and without trace of pesticides).

The main ingredient of the beverage of the invention is aloe vera juice, preferably BIO. In a more preferred assay, the juice is juice of aloe vera BIO. In an even more preferred assay, aloe vera juice has been grown in the Iberian Peninsula.

In one assay the beverage of the invention does not carry water added exogenously. That is, the water present in the drink only comes from ingredients of plant origin.

The beverage of the invention can also include acidulant, antioxidant, thickening, preserving and sweetening type of ingredients, among others. In a more preferred assay, the beverage includes an acidulant and an antioxidant. These ingredients can be of natural origin, from vegetables that comprise them, or of synthetic origin. In a more preferred assay, the beverage includes citric acid (as an acidulant) and ascorbic acid (as an antioxidant). These ingredients allow the preservation of the drink.

The beverage of the invention includes the following ingredients:
- agave syrup 20 - 60 % (w/v);
- Maca extract 0.2 - 1.2 % (w/v);
- Guarana extract 0.4 - 1.2 % (w/v);
- acai extract 0.2 - 1.2 % (w/v);
- citric acid 0.5 - 1.0 % (w/v);
- ascorbic acid 0.05 - 0.20 % (w/v);
- aloe vera juice;
all weight percentages of each ingredient are referred to the final volume of the beverage (w / v), whereas the beverage does not include carbonic acid (H₂CO₃).

In an even more preferred assay, the beverage of the invention includes the following ingredients:
- 20 % agave syrup (w/v);
- 1.2 % maca extract (w/v);
- Guarana extract 1.2% (w/v);
- acai extract 1.2% (w/v);
- 0.5 % citric acid (w/v);
- 0.05 % (w/v) ascorbic acid;
- aloe vera juice
all weight percentages of each ingredient are referred to the final volume of the beverage (w/v), whereas the beverage does not include carbonic acid (H₂CO₃).

In an even more preferred assay, agave syrup, plant extracts and aloe vera juice from the above beverages are of the BIO type.

In one assay, the invention refers to a beverage consisting of the following ingredients:
- 20 % agave syrup (w/v);
- 1.2 % maca extract (w/v);
- Guarana extract 1.2% (w/v);
- acai extract 1.2% (w/v);
- 0.5 % citric acid (w/v);
- 0.05 % (w/v) ascorbic acid;
- aloe vera juice.

In a more preferred assay, the invention refers to a beverage consisting of the following ingredients:
- 20 % agave syrup BIO (w/v);
- Maca extract BIO 1.2 % (w/v);
- guarana extract BIO 1.2 % (w/v);
- Acai extract BIO1.2 % (w/v);
- 0.5 % citric acid (w/v);
- 0.05 % (w/v) ascorbic acid;
- aloe vera juice BIO.

In another assay, the beverage according to any of the above assays includes aromas. The aromas that are added to the present invention can be selected from the group that includes: cola, chocolate, orange, pineapple, peach and cranberry or strawberry red fruits. In a more preferred assay, the aroma concentration in the beverage is 0.1 - 2.0 % (w/v).

The present invention is also directed towards the obtaining method of a beverage that includes the following mix:
- 20 - 60 % (w/v) agave syrup;
- 0.2 - 1.2 % (w/v) maca extract;
- 0.4 - 1.2 % (w/v) guarana extract;
- 0.2 - 1.2 % (w/v) acai extract;
- 0.5 - 1.0 % (w/v) acidulant;
- 0.05 - 0.20 % (w/v) antioxidant;
- Aloe Vera juice to the final volume.

The present invention also refers to the use of the energy drink as a food supplement.

The present invention also refers to packaging chosen from the group that includes Doy Pack, glass bottle, plastic bottle, PET container, HDPE or LDPE plastic container, bioplastics, can or any container suitable for food liquids, which includes the beverage of the invention according to the previous assays.

### PREFERRED EMBODIMENTS

### Example 1: Obtaining organic aloe vera juice.

The preparation of the drink takes place according to the following process:
To prepare the juice of aloe vera BIO, first, one or more leaves of the plant were taken, from a certified organic crop (BIO).

Next, the leaves of the plant were subjected to a disinfection process, submerging them in water with 5% sodium hypochlorite. The disinfected leaves were passed through a brushing system that removed the remains of dirt. Next, the disinfected and clean sheets were rinsed with plenty of clean water and then manually cut with a knife to remove the bark from the leaf. Then the inner part of the leaf (called parenchyma or gel) was removed.

The phenolic aloin compounds present in the bark of the aloe vera plant must be absent or in low concentrations, according to food legislation. The limit of aloins allowed in the juice for human consumption must be equal to or less than 10 %. For this reason, only the parenchyma of the plant was used.

The parenchyma is ground adding citric acid and ascorbic acid, which prevent its degradation.

In this way a BIO aloe vera juice was obtained that includes all the parenchyma fibers of the plant.

### Example 2: Preparation of a non-carbonated energy drink.

To obtain the non-carbonated energy drink, proceed as described below:
To prepare a liter of drink, the following ingredients were used:
- 20% agave syrup BIO (w/v);
- 1.2 % Maca extract BIO (w/v);
- 1.2 % guarana extract BIO (w/v);
- 1.2 % Acai extract BIO (w/v);
- 0.5 % citric acid (w/v);
- 0.05 % (w/v) ascorbic acid;
- aloe vera juice BIO prepared according to example 1 to a final volume of one liter.

The plant extracts present in the drink are all of biological origin (BIO) and from the Mapryser commercial house (Plaça de Joan Cornudella, 23, 08035 Barcelona). These extracts are natural and of biological origin in accordance with legislation.

Once all the ingredients were mixed, the pH was adjusted with citric acid to a value of pH 2.5 - 3.5.

Citric acid and ascorbic acid are necessary in the drink, since they allow its preservation and regulate its acidity. These ingredients were obtained by chemical synthesis (EPSA commercial house. Poligono Industrial Masia del Juez, 46,900 Torrente, Valencia, Spain).

The quantities of each ingredient to make 1000 ml of beverage are shown below:
- 758.5 ml of organic aloe vera juice BIO;
- 200 ml of agave syrup BIO;
- 12 ml of maca extract BIO;
- 12 ml of guarana extract BIO;
- 12 ml of acai extract BIO;
- 5 ml of citric acid;
- 0.5 ml of ascorbic acid.

It is important to note that the beverage of the invention is not carbonated and, preferably, does not include exogenous water supply, beyond the water that is intrinsic to the aloe vera juice.

## Claims

1. Beverage comprising
- 20 - 60 % agave syrup (w/v);
- 0.2 - 1.2 % maca extract (w/v);
- 0.4 - 1.2 % guarana extract (w/v);
- 0.2 - 1.2 % acai extract (w/v);
- 0.5 - 1.0 % citric acid (w/v);
- 0.05 - 0.20 % ascorbic acid (w/v);
- aloe vera juice;
wherein the percentages are referred to the total volume of the drink, and wherein the beverage does not include carbonic acid (H₂CO₃).

2. Beverage according to claim 1, wherein the ingredients aloe vera juice, maca extract, guarana extract and acai extract are of biological origin (BIO).

3. Beverage according to any of claims 1 or 2, comprising:
- 20 - 60 % agave syrup BIO (w/v);
- 0.2 - 1.2 % maca extract BIO (w/v);
- 0.4 - 1.2 % guarana extract BIO (w/v);
- 0.2 - 1.2 % acai extract BIO (w/v);
- 0.5 - 1.0 % citric acid (w/v);
- 0.05 - 0.20 % ascorbic acid (w/v);
- aloe vera juice BIO up to 100% (v/v);
wherein the percentages are referred to the total volume of the drink.

4. Beverage according to any of claims 1 to 3 wherein the beverage consists of:
- 20 % agave syrup BIO (w/v);
- 1.2 % maca extract BIO (w/v);
- 1.2 % guarana extract BIO (w/v);
- 1.2 % Acai extract BIO (w/v);
- 0.5 % citric acid (w/v);
- 0.05 % ascorbic acid (w/v);
- 75.85 % aloe vera juice BIO (v/v).

5. Beverage according to any of claims 1 to 4, wherein it further includes aromas of the group consisting of cola, chocolate, orange, pineapple, peach and red fruits.

6. Beverage according to claim 5, wherein the aromas are of biological origin (BIO).

7. Food supplement comprising the beverage according to any of claims 1 to 6.

8. Process for obtaining a non-carbonated beverage comprising mixing the following ingredients:
- 20 - 60 % (w/v) agave syrup;
- 0.2 - 1.2 % (w/v) maca extract;
- 0.4 - 1.2 % (w/v) guarana extract;
- 0.2 - 1.2 % (w/v) acai extract;
- 0.5 - 1.0 % (w/v) acidulant;
- 0.05 - 0.20 % (w/v) antioxidant;
- aloe vera juice up to 100% of the final volume.

9. Use of the beverage according to any of claims 1 to 6 as a food supplement.

## Patentansprüche

1. Getränk, Folgendes umfassend:
- 20 - 60 % Agavensirup (w/v);
- 0,2 - 1,2 % Maca-Extrakt (w/v);
- 0,4 - 1,2 % Guaraná-Extrakt (w/v);
- 0,2 - 1,2 % Açaí-Extrakt (w/v);
- 0,5 - 1,0 % Zitronensäure (w/v);
- 0,05 - 0,20 % Ascorbinsäure (w/v);
- Saft von *Aloe vera;*
wobei sich die Anteile auf das Gesamtvolumen des Getränks beziehen, und wobei das Getränk keine Kohlensäure (H₂CO₃) einschließt.

2. Getränk nach Anspruch 1, wobei die Bestandteile Saft von *Aloe vera,* Maca-Extrakt, Guaraná-Extrakt und Açaí-Extrakt biologischen Ursprungs (BIO) sind.

3. Getränk nach einem der Ansprüche 1 oder 2, Folgendes umfassend:
- 20 - 60 % Agavensirup BIO (w/v);
- 0,2 - 1,2 % Maca-Extrakt BIO (w/v);
- 0,4 - 1,2 % Guaraná-Extrakt BIO (w/v);
- 0,2 - 1,2 % Açaí-Extrakt BIO (w/v);
- 0,5 - 1,0 % Zitronensäure (w/v);
- 0,05 - 0,20 % Ascorbinsäure (w/v);
- Saft von *Aloe vera* BIO bis zu 100 % (v/v);
wobei sich die Anteile auf das Gesamtvolumen des Getränks beziehen.

4. Getränk nach einem der Ansprüche 1 bis 3, wobei das Getränk aus Folgendem besteht:
- 20 % Agavensirup BIO (w/v);
- 1,2 % Maca-Extrakt BIO (w/v);
- 1,2 % Guaraná-Extrakt BIO (w/v);
- 1,2 % Açaí-Extrakt BIO (w/v);
- 0,5 % Zitronensäure (w/v);
- 0,05 % Ascorbinsäure (w/v);
- 75,85 % Saft von *Aloe vera* BIO (v/v).

5. Getränk nach einem der Ansprüche 1 bis 4, wobei es ferner Aromastoffe aus der Gruppe bestehend aus Cola, Schokolade, Orange, Ananas, Pfirsich und roten Früchten einschließt.

6. Getränk nach Anspruch 5, wobei die Aromastoffe biologischen Ursprungs (BIO) sind.

7. Nahrungsergänzungsmittel, welches das Getränk nach einem der Ansprüche 1 bis 6 umfasst.

8. Verfahren zum Erhalt eines kohlensäurefreien Getränks, welches das Mischen der folgenden Bestandteile umfasst:
- 20 - 60 % (w/v) Agavensirup;
- 0,2 - 1,2 % (w/v) Maca-Extrakt;
- 0,4 - 1,2 % (w/v) Guaraná-Extrakt;
- 0,2 - 1,2 % (w/v) Açaí-Extrakt;
- 0,5 - 1,0 % (w/v) Säuerungsmittel;
- 0,05 - 0,20 % (w/v) Antioxidationsmittel;
- Saft von *Aloe vera* bis zu 100 % des Endvolumens.

9. Verwendung des Getränks nach einem der Ansprüche 1 bis 6 als Nahrungsergänzungsmittel.

## Revendications

1. Boisson comprenant
- 20 - 60% de sirop d'agave (p/v) ;
- 0,2 - 1,2% d'extrait de maca (p/v) ;
- 0,4 - 1,2% d'extrait de guarana (p/v) ;
- 0,2 - 1,2% d'extrait d'açai (p/v) ;
- 0,5 - 1,0% d'acide citrique (p/v) ;
- 0,05 - 0,20% d'acide ascorbique (p/v) ;
- jus d'aloe vera ;
dans laquelle les pourcentages sont par rapport au volume total de la boisson, et dans laquelle la boisson ne comprend pas d'acide carbonique (H₂CO₃).

2. Boisson selon la revendication 1, dans laquelle les ingrédients jus d'aloe vera, extrait de maca, extrait de guarana et extrait d'açai sont d'origine biologique (BIO).

3. Boisson selon l'une quelconque des revendications 1 ou 2, comprenant :
- 20 - 60% de sirop d'agave BIO (p/v) ;
- 0,2 - 1,2% d'extrait de maca BIO (p/v) ;
- 0,4 - 1,2% d'extrait de guarana BIO (p/v) ;
- 0,2 - 1,2% d'extrait d'açai BIO (p/v) ;
- 0,5 - 1,0% d'acide citrique (p/v) ;
- 0,05 - 0,20% d'acide ascorbique (p/v) ;
- jus d'aloe vera BIO jusqu'au 100% (v/v) ;
dans laquelle les pourcentages sont par rapport au volume total de la boisson.

4. Boisson selon l'une quelconque des revendications 1 à 3, dans laquelle la boisson consiste en :
- 20% de sirop d'agave BIO (p/v) ;
- 1,2% d'extrait de maca BIO (p/v) ;
- 1,2% d'extrait de guarana BIO (p/v) ;
- 1,2% d'extrait d'açai BIO (p/v) ;
- 0,5% d'acide citrique (p/v) ;
- 0,05% d'acide ascorbique (p/v) ;
- 75,85% de jus d'aloe vera BIO (v/v).

5. Boisson selon l'une quelconque des revendications 1 à 4, qui comprend en outre des arômes du groupe consistant en cola, chocolat, orange, ananas, pêche et des fruits rouges.

6. Boisson selon la revendication 5, dans laquelle les arômes sont d'origine biologique (BIO).

7. Complément alimentaire comprenant la boisson selon l'une quelconque des revendications 1 à 6.

8. Procédé pour l'obtention d'une boisson non carbonée comprenant le mélange des ingrédients suivants :
- 20 - 60% (p/v) de sirop d'agave ;
- 0,2 - 1,2% (p/v) d'extrait de maca ;
- 0,4 - 1,2% (p/v) d'extrait de guarana ;
- 0,2 - 1,2% (p/v) d'extrait d'açai ;
- 0,5 - 1,0% (p/v) d'acidulant ;
- 0,05 - 0,20% (p/v) d'antioxydant ;
- jus d'aloe vera jusqu'au 100% du volume final.

9. Utilisation de la boisson selon l'une quelconque des revendications 1 à 6 en tant que complément alimentaire.
